# EUROPEAN PATENT APPLICATION

(11) **EP 2 017 839 A1**
(43) Date of publication of application: **21.01.2009**
(21) Application number: 06746140.0
(22) Date of filing: 09.05.2006
(51) Int. Cl.: G11B 20/10, G06F 21/24, G11B 27/00, H04N 5/91

(54) **INFORMATION RECORDING MEDIUM**

(71) Applicant: Pioneer Corporation, Tokyo 153-8654 (JP)
(72) Inventor: KURODA, Kazuo, Tokorozawa-shi, Saitama 359-8522 (JP); SAWABE, Takao, Tokorozawa-shi, Saitama 359-8522 (JP)
(74) Representative: Viering, Jentschura & Partner
(86) International application number: PCT/JP2006/309309
(87) International publication number: WO 2007/129404

(57) **Abstract**

An information recording medium (10, 301) contains content information and a judging program which is executed by an information reproducing apparatus for reproducing the content information and judges whether the information reproducing apparatus is authorized or not.

## Description

### Technical Field

The present invention relates to an information recording medium such as DVD, an information reproducing apparatus such as DVD player, and an information reproducing method.

### Background Art

A region code which restricts regions where contents can be reproduced is assigned to a DVD. Specifically, whole world is divided into six regions (or seven regions when planes are treated as one region), and unique region code to each region is prescribed. And one or a plurality of such region codes is/are assigned to the DVD. In addition, one region code is also assigned to a DVD player for reproducing the DVD. Therefore, the DVD player can reproduce the contents recorded on the DVD, only if the region code assigned to the DVD matches the region code assigned to the DVD player. For example, both DVDs and DVD players marketed in Japan are assigned with a region code of "2". Because of this, contents recorded on the DVDs marketed in Japan can be reproduced by using the DVD players marketed in Japan. On the other hand, DVDs marketed in United States are assigned with a region code of "1". Because of this, contents recorded on the DVDs marketed in United States cannot be reproduced by using the DVD players marketed in Japan. Such control of reproduction of the DVDs is described as RPC (Region Playback Control).

Referring to a patent document 1, it is disclosed that a DVD player for reproducing the DVD stores information (which is described as "region information") which indicates country or region where the DVD player should be installed and operated. On the other hand, during manufacturing of DVD, the DVD stores information (which is described as "disc region information") which indicates country or region where reproduction is permitted for movies or the like recorded on the DVDs. The region information stored in the DVD player, on which the DVD is loaded after distribution, and the disc region information recorded on the DVD are compared with each other when reproduction is started after the loading. The DVD player is controlled so as to start reproducing the movie or the like only when both region information matches.
Patent document 1: Japanese Patent Application Laying Open NO. 2004-127486.

### Disclosure of Invention

### Subject to be Solved by the Invention

However, most DVD players manufactured illegally such as copies do not use the RPC described above. Moreover, though one region code has to be statically assigned to one DVD player, there are devices being assigned a plurality of region codes. Alternatively, a device which avoids the RPC illegally by rewriting a region code of a DVD player in accordance with the region code assigned to a loaded DVD can be supposed. Moreover, there also are DVD players illegally manufactured not to do not only the RPC but also various controls which are supposed to be performed in accordance with the standard. Generally, these devices are handled as illegal items (which mean unauthorized devices) such as pirated productions.

In order to solve the above-mentioned problems, it is therefore an object of the present invention to provide an information recording medium, an information recording apparatus and an information reproducing method which enable appropriate restriction of a reproduction of a content by detecting a pirated production which does not meet the standard.

### Means for Solving the Object

The above object of the present invention can be achieved by an information recording medium of the present invention on which there are recorded a content information; and a judging program which is executed by an information reproducing apparatus for reproducing the content information and judges whether the information reproducing apparatus is authorized or not.

A function and other benefit of the present invention will be made clear by the embodiment described below.

### Brief Description of Diagrams

[FIG. 1] FIG. 1 is a schematic plain diagram showing one basic structure of an optical disc of the example, a schematic cross-section diagram of the optical disc and relating schematic diagram showing a structure of recording domain along radial direction of the optical disc.
[FIG. 2] FIG. 2 is a structural diagram schematically showing basic data structure of the content recorded on the optical disc.
[FIG. 3] FIG. 3 is a structural diagram schematically showing data structure of the VTS among the data structure of the content recorded on the optical disc.
[FIG. 4] FIG. 4 is a structural diagram schematically showing data structure of the VMG among the data structure of the content recorded on the optical disc.
[FIG. 5] FIG. 5 is a timing chart schematically showing PGC (Program Chain) which prescribes reproducing unit of the content recorded on the optical disc.
[FIG. 6] FIG. 6 is a block diagram schematically showing the basic structure of an example of an information reproducing apparatus of the present invention.
[FIG. 7] FIG. 7 is a structural diagram showing a specific example of a disc region.
[FIG. 8] FIG. 8 is a structural diagram showing a specific example of a device region assigned to the information reproducing apparatus.
[FIG. 9] FIG. 9 is a flowchart schematically showing a first script recorded on the optical disc.
[FIG. 10] FIG. 10 is a flowchart schematically showing a second script recorded on the optical disc.
[FIG. 11] FIG. 11 is a timing chart schematically showing restriction of the user operation by UOP (User Operation) flag.

### Description of Reference Codes

- 10: optical disc
- 30: VTS
- 36: PGCI table
- 38: PGCI
- 40: command information table
- 43: pre-command table
- 44: post-command table
- 45: cell command table
- 50: VMG
- 59: FP PGCI
- 61: disc region
- 71: device region
- 100: information recording apparatus
- 112: optical pick up
- 113: signal reproducing device
- 121: CPU

### Best Mode for Carrying Out the Invention

Hereinafter, an embodiment of the information recording medium, the information reproducing apparatus and the information reproducing method of the present invention will be explained as the best mode for carrying out the invention.

### (Information recording medium)

On an embodiment of the information recording medium of the present invention, there are recorded a content information and a judging program which is executed by an information reproducing apparatus for reproducing the content information and judges whether the information reproducing apparatus is authorized or not.

According to the embodiment of the information recording medium of the present invention, the content information containing a movie or music is recorded. Particularly, according to the embodiment, a judging program which is executed by the information reproducing apparatus for reproducing the content information and judges whether the information reproducing apparatus is authorized or not (in other words, whether the information reproducing apparatus is an illegal item such as a pirated production or not), is recorded thereon. Incidentally, the "unauthorized information reproducing apparatus (i.e. the information reproducing apparatus as the illegal item such as a pirated production)" means an information reproducing apparatus which illegally reproduces the content information recorded on the information recording medium which is based on a standard. In other words, it means an information reproducing apparatus to which illegal or unauthorized modification which is not based on the standard is added, or an information recording apparatus which reproduces the content information recorded on the information recording medium which is based on the standard without performing controls supposed to be performed from the beginning.

Because of this, the information reproducing apparatus which loads the information recording medium of the embodiment has to also execute the judging program when reproducing content information. Because of this, if it is judged by the judging program that the information reproducing apparatus is unauthorized, it is able to restrict the subsequent reproduction of the content information, by a restricting program described below. Therefore, it is able to appropriately restrict the reproduction of the content information by using the unauthorized information reproducing apparatus.

Particularly, according to the embodiment, by reproducing the content information and executing the judging program recorded on the information recording medium by the information reproducing apparatus itself, it is judged whether the information reproducing apparatus is authorized or not. Because of this, it is hard or impossible for even the unauthorized information reproducing apparatus to completely avoid execution of the judging program. Therefore, it is able to appropriately restrict the reproduction of the content information by the unauthorized information reproducing apparatus.

In one aspect of the embodiment of the information recording medium of the present invention, the judging program is recorded to be contained in reproduction sequence of the content information.

According to this aspect, when the information reproducing apparatus reproduces the content information, the judging program is necessarily executed in a part of the reproduction sequence. Because of this, it is hard or impossible for even the unauthorized information reproducing apparatus to completely avoid execution of the judging program. Therefore, it is able to appropriately restrict the reproduction of the content information by the unauthorized information reproducing apparatus.

In another aspect of the embodiment of the information recording medium of the present invention, the judging program is recorded as pre-command information which is executed by the information reproducing apparatus before reproduction of a whole of the content information or a part of the content information (e.g. a cell, a part of a content information specified by one PCG and so on, as described below).

According to this aspect, when the information reproducing apparatus reproduces the content information or a part of that, the judging program is executed as a pre-command which is necessarily executed before the reproduction. Because of this, it is hard or impossible for even the unauthorized information reproducing apparatus to completely avoid execution of the judging program. Therefore, it is able to appropriately restrict the reproduction of the content information by the unauthorized information reproducing apparatus.

In another aspect of the embodiment of the information recording medium of the present invention, the judging program is recorded as post-command information which is executed by the information reproducing apparatus after reproduction of a whole of the content information or a part of the content information.

According to this aspect, when the information reproducing apparatus reproduces the content information or a part of that, the judging program is executed as a post-command which is necessarily executed after the reproduction. Because of this, it is hard or impossible for even the unauthorized information reproducing apparatus to completely avoid execution of the judging program. Therefore, it is able to appropriately restrict the reproduction of the content information by the unauthorized information reproducing apparatus.

In another aspect of the embodiment of the information recording medium of the present invention, the judging program is recorded as command information which is executed at a predetermined timing during reproduction of the content information.

According to this aspect, when the information reproducing apparatus reproduces the content information or a part of it, the judging program is executed as a post-command which is necessarily executed during the reproduction. Because of this, it is hard or impossible for even the unauthorized information reproducing apparatus to completely avoid execution of the judging program. Therefore, it is able to appropriately restrict the reproduction of the content information by the unauthorized information reproducing apparatus.

In another aspect of the embodiment of the information recording medium of the present invention, a plurality of judging programs is recorded on the information recording medium discretely.

According to this aspect, it is hard or impossible for even the unauthorized information reproducing apparatus to completely avoid execution of all of the plurality of judging programs recorded on the information recording medium discretely. In other words, even if the unauthorized information reproducing apparatus attempts to perform any particular kind of operation (e.g. any operation for deleting judging program by using any illegal method), it is hard or impossible to completely avoid execution of all judging programs because a plurality of judging programs are recorded on the information recording medium. Therefore, it is able to appropriately restrict the reproduction of the content information by the unauthorized information reproducing apparatus.

In another aspect of the embodiment of the information recording medium of the present invention, the judging program is divided into a plurality of divided programs and the plurality of divided programs are recorded discretely.

According to this aspect, it is hard or impossible for even the unauthorized information reproducing apparatus to completely avoid execution of the judging program recorded on the information recording medium in divided and discrete form. In other words, even if the unauthorized information reproducing apparatus attempts to perform any particular kind of operation (e.g. any operation for deleting judging program by using any illegal method), it is hard or impossible to completely avoid execution of the judging program because it is recorded on a plural part of the information recording medium in divided and discrete form. Therefore, it is able to appropriately restrict the reproduction of the content information by the unauthorized information reproducing apparatus.

In another aspect of the embodiment of the information recording medium of the present invention, the judging program judges whether the information reproducing apparatus is authorized or not on the basis of region information which prescribes a region in which the content information is able to be reproduced.

According to this aspect, it is able to appropriately restrict the reproduction of the content information by the information reproducing apparatus which illegally avoids controls using region information (i.e. an example of the unauthorized information reproducing apparatus). Moreover, it is hard or impossible for even the information reproducing apparatus which does not perform controls using region information (i.e. RPC described above) to completely avoid execution of the judging program recorded as well as the content information. Therefore, it is able to appropriately restrict the reproduction of the content information by the information reproducing apparatus which does not perform controls using region information (i.e. an example of the unauthorized information reproducing apparatus).

In an aspect of the information recording medium on which the judging program which judges whether the information reproducing apparatus is authorized or not on the basis of the region information is recorded, as described above, the information recording medium may be assigned with region free in place of legitimate region information, the judging program may be constructed to judge whether the legitimate region information of the information recording medium matches region information assigned to the information reproducing apparatus or not, after reproduction of the content information is started, and judge that the information reproducing apparatus is not authorized if the legitimate region information of the information recording medium does not match the region information assigned to the information reproducing apparatus.

Because of such structure, the information recording medium is assigned with artificial region free (i.e. the region information which can be reproduced by all information reproducing apparatus) in place of the legitimate region information. Because of this, the information reproducing apparatus which illegally rewrites the region information of the information reproducing apparatus in accordance with the region information of the information recording medium (i.e. an example of the unauthorized information reproducing apparatus) cannot determine which region information the information reproducing apparatus should rewrites to.

On the other hand, the information recording medium is assigned with the legitimate region information separately. Because of this, because the artificial region free is assigned to, even the reproduction of the content information by even the unauthorized information reproducing apparatus is started at first. However, it is judged that the information reproducing apparatus is unauthorized, unless the legitimate region information matches the region information assigned to the information reproducing apparatus. Therefore, it is able to appropriately restrict the reproduction of the content information by the unauthorized information reproducing apparatus as a result.

In short, it is able to appropriately restrict the reproduction of the content information by the information reproducing apparatus which illegally rewrites the region information of the information reproducing apparatus in accordance with the region information of the information recording medium, by assigning region free to the information recording medium and comparing the legitimate region information with the region information assigned to the information reproducing apparatus.

In an aspect of the information recording medium on which the judging program which judges whether the information reproducing apparatus is authorized or not on the basis of the region information is recorded, as described above, the judging program may be constructed to judge whether the information reproducing apparatus is assigned with region information other than legitimate region information or not, and judge that the information reproducing apparatus is not authorized if the information reproducing apparatus is assigned with the region information other than the legitimate region information.

Because of such structure, it is able to appropriately restrict the reproduction of the content information by the information reproducing apparatus, when region information different from the legitimate region information is assigned to the information reproducing apparatus, even if region information same as the legitimate region information assigned to the information recording medium is assigned to the information reproducing apparatus. In other words, it is able to appropriately restrict the reproduction of the content information by the information reproducing apparatus which is assigned with a plurality of region information rather than one region information which is supposed to be assigned (i.e. an example of the unauthorized information reproducing apparatus).

In an aspect of the information recording medium on which the judging program which judges whether the information reproducing apparatus is authorized or not on the basis of the region information is recorded, as described above, the judging program may be constructed to judge whether the information reproducing apparatus is assigned with a plurality of region information or not, and judge that the information reproducing apparatus is not authorized if the information reproducing apparatus is assigned with the plurality of region information.

Because of such structure, it is able to appropriately restrict the reproduction of the content information by the information reproducing apparatus which is assigned with a plurality of region information rather than original one region information which is supposed to be assigned (i.e. an example of the unauthorized information reproducing apparatus).

In another aspect of the embodiment of the information recording medium of the present invention, the judging program judges whether the information reproducing apparatus is authorized or not, on the basis of whether or not the information reproducing apparatus accepts an operation of a user in a restriction period of operation in which the operation of the user is restricted during the reproduction of content information.

According to this aspect, it is able to appropriately restrict the reproduction of the content information by the information reproducing apparatus which accepts the operation of the user in the restriction period of operation (i.e. an example of the unauthorized information reproducing apparatus). Specifically, if the information reproducing apparatus accepts the operation of the user in the restriction period of operation, it can be judged that the information reproducing apparatus is unauthorized.

In another aspect of the embodiment of the information recording medium of the present invention, the judging program judges whether the information reproducing apparatus is authorized or not on the basis of whether a parental lock function for restricting reproduction of a certain content information is deactivated or not.

According to this aspect, it is able to appropriately restrict the reproduction of the content information by the information reproducing apparatus which deactivates the parental lock function illegally (i.e. an example of the unauthorized information reproducing apparatus). Specifically, if the parental lock function is deactivated illegally, it can be judged that the information reproducing apparatus is unauthorized.

In another aspect of the embodiment of the information recording medium of the present invention, a restricting program which is executed by the information reproducing apparatus and restricts reproduction of the content information by the information reproducing apparatus on the basis of a result of the judgment of the judging program, is further recorded.

According to this aspect, it is able to appropriately restrict the reproduction of the content information by the unauthorized information reproducing apparatus.

Incidentally, the restriction program may also be recorded on same aspects as the aforementioned judging program is recorded.

In another aspect of the embodiment of the information recording medium of the present invention, a reproduction program which is executed by the information reproducing apparatus and reproduces the content information on the basis of a result of the judgment of the judging program, is further recorded.

According to this aspect, it is able to reproduce special content information such as alarm screen, when the information reproducing apparatus is unauthorized, as described below.

As explained above, according to the information recording medium of the present invention, content information and a judging program are recorded thereon. Thus, it is able to appropriately restrict the reproduction of the contents by the unauthorized device.

### Example

Hereinafter, an example of an information recording medium of the present invention will be explained with reference to the diagrams.

### (1) Basic Structure of Information Recording Medium

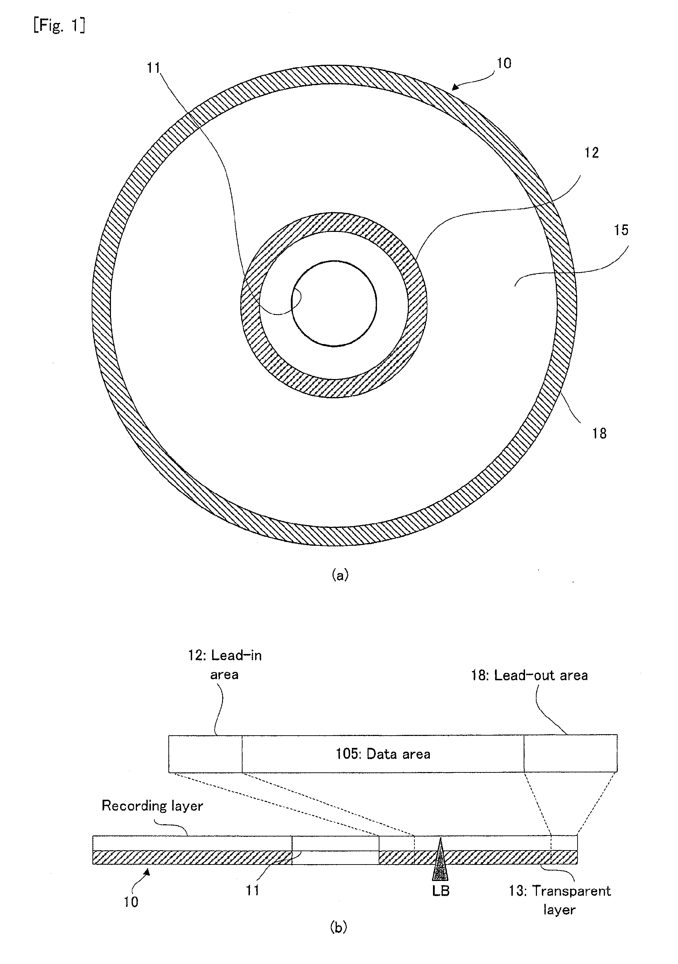

Firstly, with reference to FIG. 1, an optical disc as the example of the information recording medium of the present invention will be explained. FIG.1(a) is a schematic plain diagram showing one basic structure of the optical disc of the example. FIG. (1) is a schematic cross-section diagram of the optical disc and relating schematic diagram showing a structure of a recording domain along radial direction of the optical disc.

As shown in FIG. 1(a) and FIG. 1(b), an optical disc 10 in the embodiment is provided with, for example, lead-in area 12, data area 15, and the lead-out area 18 around a center hole 11, in a recording surface on the disc with a diameter of about 12cm as well as DVD. Furthermore, a recording layer and so on is stacked on a transparent layer 13 in the optical disc 10. Furthermore, for example, a track including a groove track and a land track is provided alternately, for example, spirally or concentrically with the center hole 11 being as the center in each recording domain of the recording layer. Moreover, data is recorded on the track with the data being divided into the unit described as ECC (Error Collection Code) blocks. ECC block is a data management unit in which recorded information can be error-corrected.

Incidentally, the optical disc 10 of the example is not limited to the optical disc containing a single recording layer as shown in FIG. 1(a) and FIG. 1(b), and can be the optical disc containing a plurality of recording layers.

### (2) Data Structure on the Information Recording Medium

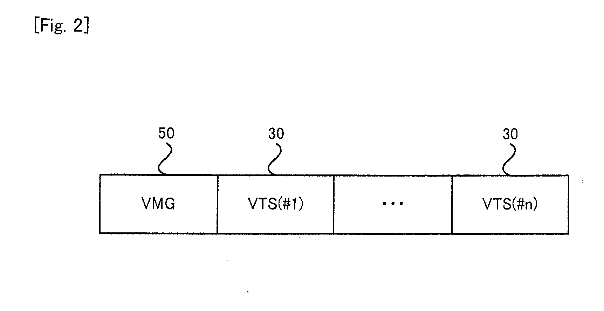

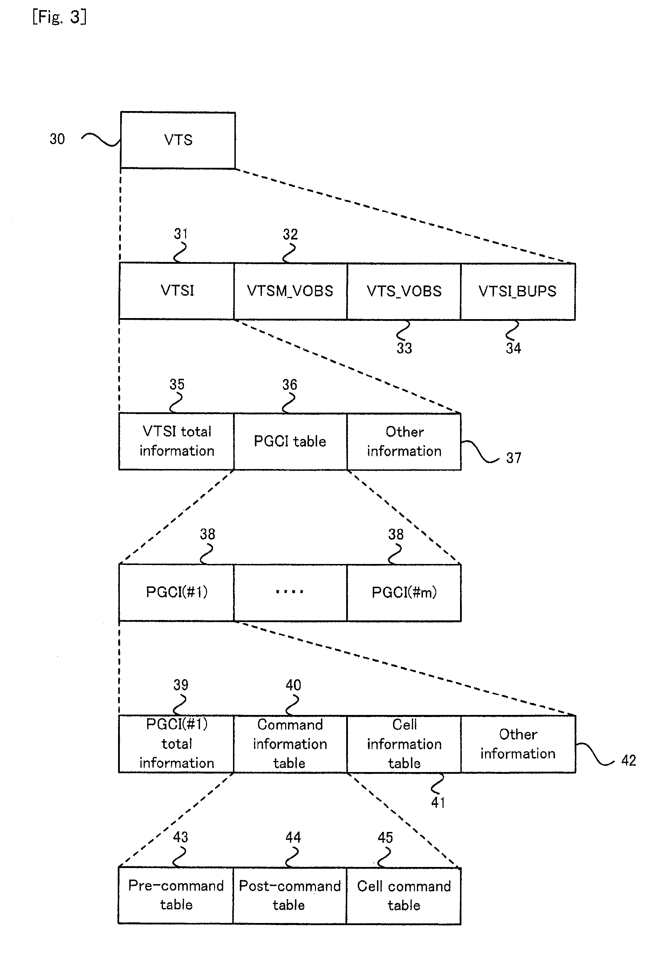

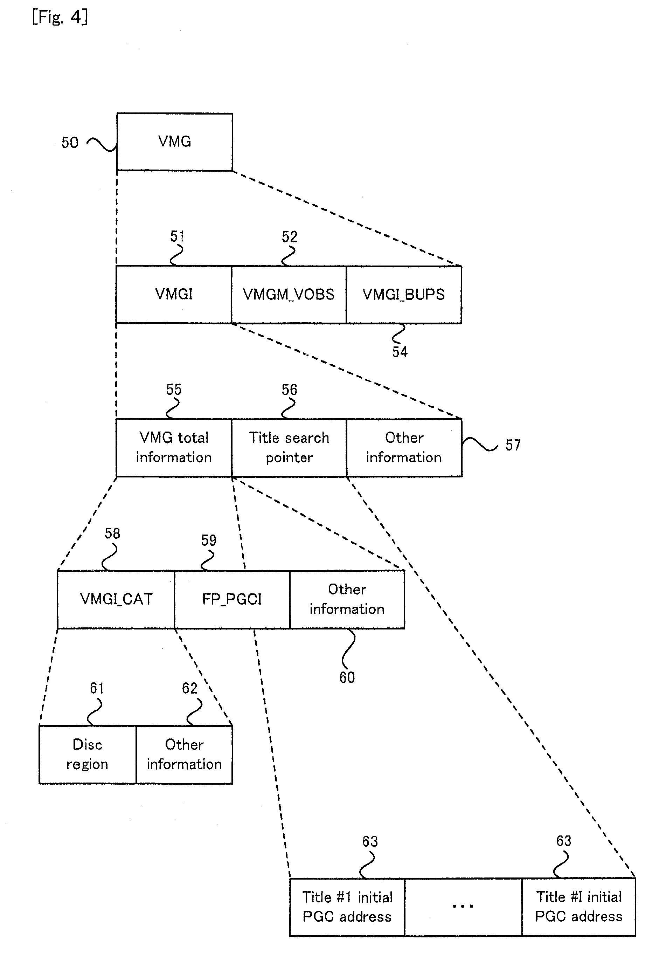

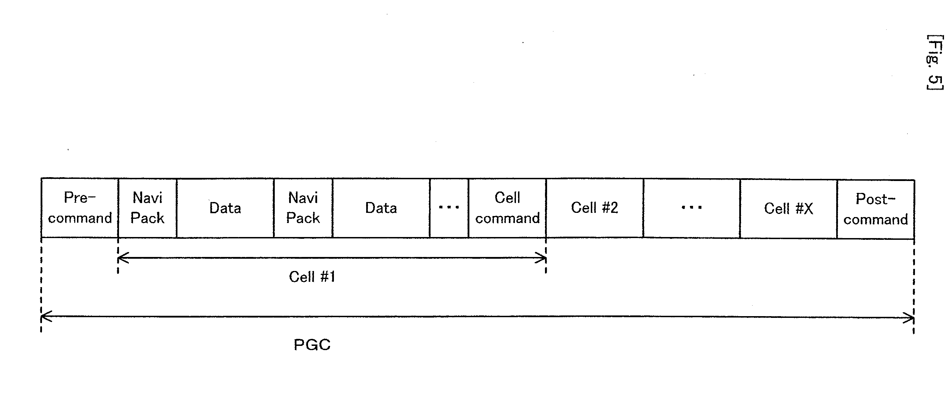

Next, with reference to FIG. 2 to FIG. 5, the specific structure of contents recorded on the optical disc 10 will be explained. FIG. 2 is a structural diagram schematically showing basic data structure of the content recorded on the optical disc 10. FIG. 3 is a structural diagram schematically showing data structure of the VTS 30 among the data structure of the content recorded on the optical disc 10. FIG. 4 is a structural diagram schematically showing data structure of the VMG 40 among the data structure of the content recorded on the optical disc 10. FIG. 5 is a timing chart schematically showing PGC (Program Chain) which prescribes reproducing unit of the content recorded on the optical disc 10.

Incidentally, in explanation below, a specific example of the optical disc 10 which is in conformity with the DVD standard will be explain. Therefore, detailed explanation of the structure same as the DVD standard will be omitted for the sake of shorthand. Moreover, it is preferred that the contents recorded on the optical disc 10 is compressed in conformity with, for example, MPEG (Moving Picture Expert group) regulation.

As shown in FIG. 2, the contents recorded on the optical disc 10 contains n (which is an integral number between 1 and 99) VTSs 30 (Video Title Sets) and one VMG 50 (Video Manager).

Incidentally, the VTS 30 is a set (i.e. a group) of relating titles (in which the number of sound information and sub-video information contained therein and attributes such as specification and available language are same to each other), such as a single movie or a single TV program. Moreover, the VMG 50 is information for managing the VTSs 30 which are contained in the contents with the VMG 50 (e.g. data, a list of data, a data file, a data table or a menu relating to the entire VTSs 30 managed by the VMG 50 (hereinafter, which is described as "total menu")).

As shown in FIG. 3, the VTS 30 contains VTSI (VTS Information) 31, VTSM VOBS (Video Object Set for the VTS Menu) 32, VTS VOBS (Video Object Set for Titles in a VTS) 33 and VTSI_BUPS (VTSI Back Up) 34.

The VTSI 31 is a managing information for managing VTS 30 and consists of a single file such as "VTS_##_O.IFO". Incidentally, "##" means an identification number for the VTS and is assigned with an integral number of 1 or more (but upper limit is 99) by turns, depending on the number of the VTSs 30 contained in the contents.

The VTSM VOBS 32 is a data for various types of menu (hereinafter, such menu is described as "title menu") relating to the VTS 30, and consists of a single file such as "VTS_##_0.VOB".

The VTS_VOBS 33 is substantial information for reproducing titles actually and consists of a single or a plurality of files such as "VTS_##_@.VOB". Incidentally, "@" is a sequential number depending on the number of files and is assigned with an integral number of 1 or more (but upper limit is 9) by turns, depending on the number of files contained in a single VTS_VOB 33.

The VTSI_BUPS 34 is a back up of VTSI 31 and consists of a single file such as "VTS_##_O.BUP".

The VTSI 31 contains VTSI total information 35 for managing the entire VTSI 31, PGCI table 36 which contains PGCIs (#m ("m" means an integral number of 1 or more)) (Program Chain Information #m) 38 for specifying data which should be reproduced among the VTSs 30, and other information 37.

The PGCI (#m) 38 contains PGCI (#m) total information 39 for managing the entire PGCI (#m) 38, a command information table 40, a cell information table 41 containing information relating to a cell which means a unit for reproduction specified by the PGCI (#m), and other information 42.

The command information table 40 contains a pre-command table 43 which specifies pre-command executed before the reproduction of data specified by the PGCI (#m), post-command table 44 which specifies post-command executed after the reproduction of data specified by the PGCI (#m), a cell command table 45 which specifies cell-command executed after reproduction of cell specified by the PGCI (#m).

As shown in FIG. 4, the VMG 50 contains VMGI (VMG Information) 51, VMGM VOBS (Video Object Set for the VMG Menu) 52 and VMGI_BUPS (VMGI Back Up) 54.

The VMGI 51 is managing information for managing the entire content in which the VMG 50 is contained and consists of a single file such as "VIDEO_TS.IFO".

The VMGM_VOBS 52 is data for various types of menu (for example, menu for selecting a desired title from among a plurality of titles) relating to the entire content in which the VMG 50 is contained, and consists of a single file such as "VIDEO_TS.VOB".

The VMGI_BUPS 54 is a back up of VMGI 51 and consists of a single file such as "VIDEO_TS.BUP".

The VMGI 51 contains VMGI total information 55 for managing the entire VMGI 51, a title search pointer 56 and other information 57.

The VMG total information 55 contains a VMGI_CAT 58 including a disc region 61, FP_PGCI 59 specifying data which is reproduced first during the reproduction of the optical disc 10 and other information 60.

The title search pointer 56 specifies an address 63 on which an initial PGC of the title #1 ("1" means an integral number of 1 or more) contained in the content recorded on the optical disc 10 is recorded.

With the optical disc 10 having such a data structure, data is reproduced in the order shown in FIG. 5. As shown in FIG. 5, the content recorded on the optical disc 10 is mainly reproduced by unit of PGC. The PGC corresponds to a combination of the PGCI 38 and data specified by the PGCI 38.

When the single PGC is reproduced, firstly, configuration information of the PGC (e.g. the PGCI total information and so on) is obtained and the pre-command specified by the pre-command table 43 is executed. Then, the reproduction of the content by the unit of cell specified by the PGCI 38 is proceeded. The cell consists of a combination of a Navi Pack and data whose reproduction is controlled by the Navi Pack (e.g. a video pack, an audio pack, a sub-picture pack and so on).

The Navi Pack can be assigned with a navigation command and the navigation command can be executed before the reproduction of data. The navigation command can be assigned with a command by which a certain process is executed after a certain period of time. Specifically, by assigning navigation command with button command which shows transparent button which is not shown on a display, when the button command is neither selected nor executed in a certain period of time, it is able to be constructed to execute a certain process automatically.

After the reproduction of the single cell finishes, a cell command specified by the cell command table 45 is executed. Then, next cell is executed in the same manner. After the reproduction of the last cell contained in the single PGC finishes, the post-command specified by the post-command table 44 is executed. Then, next PGC is reproduced in the same manner.

### (3) Basic Structure of Information Reproducing Apparatus

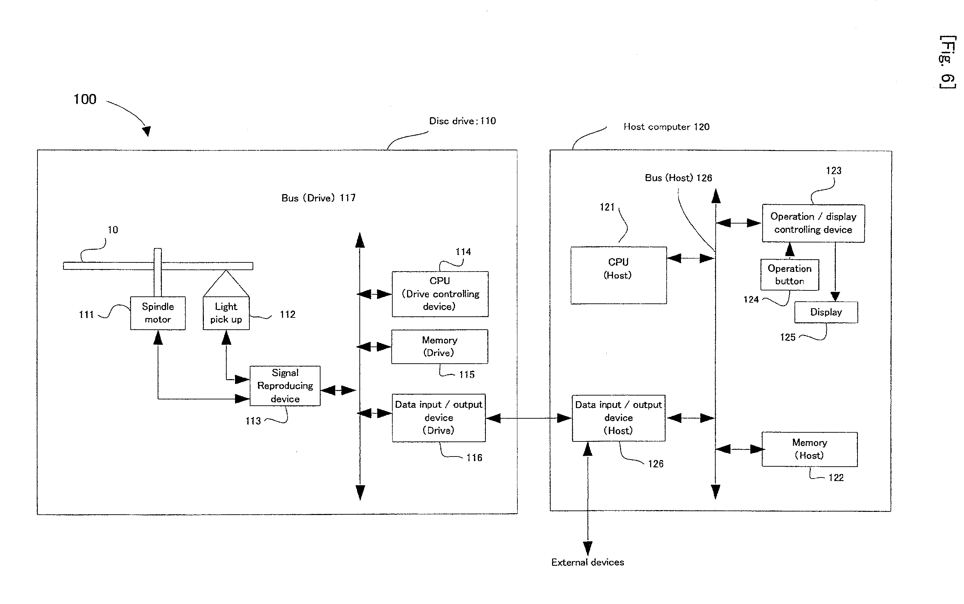

Next, with reference to FIG. 6, an example of the information reproducing apparatus which reproduces the optical disc 10 will be explained. FIG. 6 is a block diagram schematically showing the basic structure of the example of an information reproducing apparatus.

As shown in FIG. 6, an information reproducing apparatus 100 is provided with: a disc drive 110 on which the optical disc 10 actually is loaded; and a host computer 120 such as a personal computer which controls the reproduction of the content at the disc drive 110.

The disc drive 110 is provided with: the optical disc 10; a spindle motor 111; an optical pickup 112; a signal reproducing device 113; a CPU (drive controlling device) 114; a memory 115; a data input / output controlling device 116; and a bus 117. Moreover, the host computer 120 is provided with: a CPU 121; a memory 122; an operation / display controlling device 123; an operation button 124; a display panel 125; a data input / output controlling device 126; and a bus 127.

The spindle motor 111 is intended to rotate and stop the optical disc 10, and operates in accessing the optical disc 10. More specifically, the spindle motor 111 is constructed to rotate and stop the optical disc 10 at a predetermined speed while receiving spindle servo, by a not-illustrated servo unit or the like.

The optical pickup 112 is provided with: for example, a not-illustrated semiconductor laser apparatus; a collimator lens; an objective lens and the like in order to perform the reproduction with respect to the optical disc 10.

The signal reproducing device 113 performs the recording with respect to the optical disc 10 by controlling the spindle motor 111 and the optical pickup 112 under control of the CPU 114. More specifically, the signal reproducing device 113 is provided with a laser diode driver (LD driver), a head amplifier, and the like. The LD driver drives the semiconductor laser apparatus built in the optical pickup 112 by generating, for example, a drive pulse. The head amplifier amplifies the output signal of the optical pickup 112, i.e., the reflected light of the laser light, and outputs the amplified signal.

The CPU (drive controlling device) 114 is connected to the signal reproducing device 113 and the memory 115 via the bus 117, and controls the entire disc drive 110 by giving instructions to various devices. In general, software or firmware for operating the CPU 114 is stored in the memory 115.

The memory 115 is used in the entire data processing on the disc drive 110, including a buffer area for the record data, an area used as an intermediate buffer when data is converted into the data that can be used on the signal reproducing device 113, and the like. Moreover, the memory 115 is provided with: a Read Only Memory (ROM) area into which a program for performing an operation as a recording device, i.e., firmware is stored; a buffer for temporarily storing the record / reproduction data; a Random Access Memory (RAM) area into which a parameter required for the operation of the firmware program or the like is stored; and the like.

The data input / output controlling device 116 controls the data input / output from the host computer 120 with respect to the disc drive 110. A drive control command, which is issued from the external host computer 120 connected to the disc drive 110 via an interface, such as a SCSI (Small Computer System Interface) and an ATAPI (AT Attachment Packet Interface), is transmitted to the CPU 114 through the data input / output controlling device 116. Moreover, the data for recording is also exchanged with the host computer 120 through the data input / output controlling device 116.

The operation / display control device 123 performs the reception of the operation instruction with respect to the host computer 120 and display and sends the various instructions (e.g. instructions for starting or finishing the recording) by using the operation button 124, to the CPU 121. The CPU 121 sends a control command to the disc drive 110 through the input / output controlling device 126 on the basis of the instruction information from the operation / display control device 123, to thereby control the entire disc drive 110. In the same manner, the CPU 121 can send a command of requiring the disc drive 110 to send the operation condition to the host computer 120, to the disc drive 110. Because of this, it is possible to recognize the operation condition of the disc drive 110, such as during recording and during reproduction, therefore the CPU 121 can output the operation condition of the disc drive 110, to the display panel 125, such as a fluorescent tube and a LCD, through the operation / display control device 123.

In addition, the data input / output controlling device 126 outputs the reproduced content to external devices such as a display and a speaker, under control of the CPU 121. As a result, the content such as a movie and music is reproduced by the display, the speaker and the like.

The CPU 121 controls the entire host computer 120.

The memory 122 is an inner storage device used by the host computer 120, and is provided with: a ROM area into which a firmware program, such as BIOS (Basic Input / Output System), is stored; and a RAM area into which a parameter required for the operation of an operating system, an application program, or the like is stored; and the like.

### (4) Operation Example

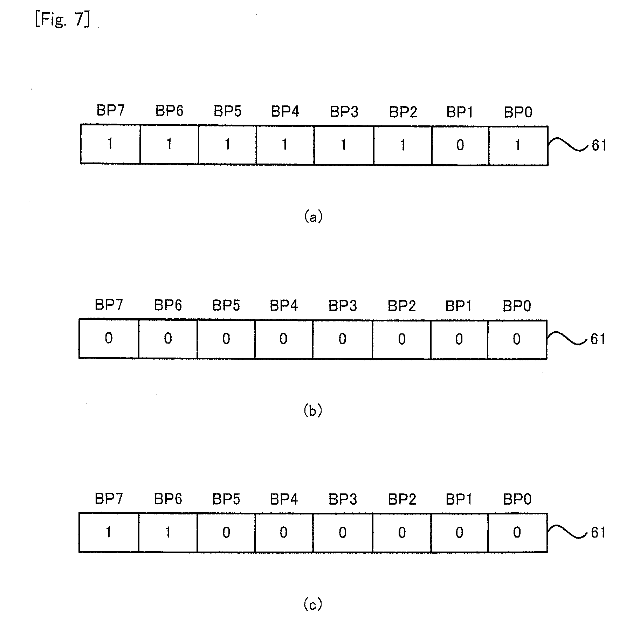

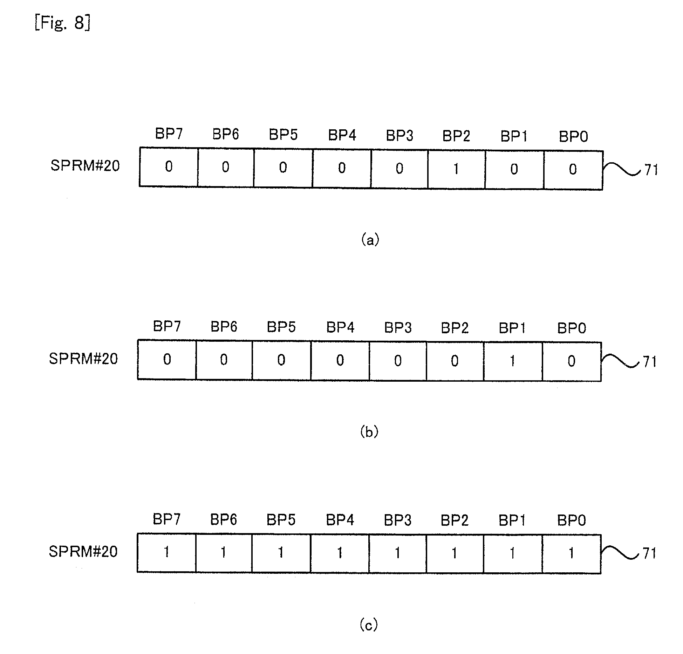

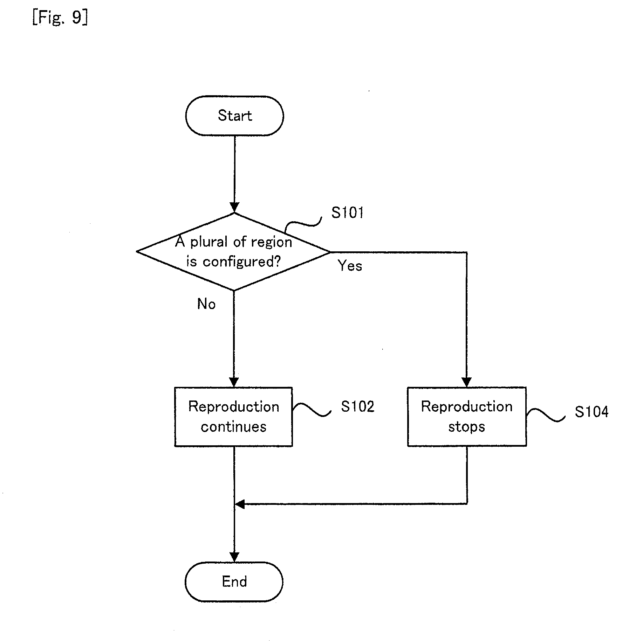

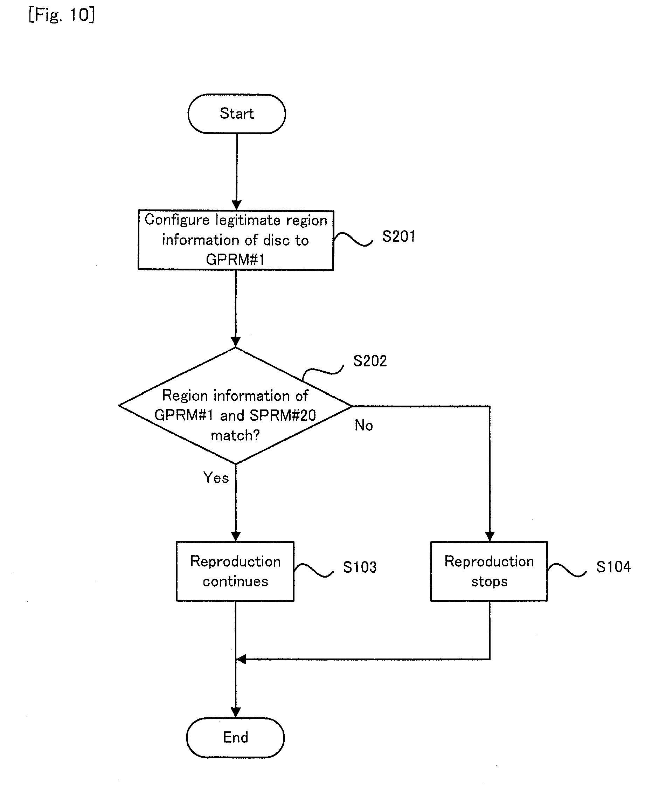

Next, with reference to FIG. 7 to FIG. 10, the reproducing operation of data recorded on the optical disc 10 in the example will be explained. More specifically, tangible example of the operation of restricting the reproduction of the content by the information reproducing apparatus 100 which is not in conformity with the DVD standard (in other words, which is added illegal modification which is not in conformity with the DVD standard, or which is unauthorized) will be explained. FIG. 7 is a structural diagram showing a specific example of a disc region 61. FIG. 8 is a structural diagram showing a specific example of a device region 71 assigned to the information reproducing apparatus 100. FIG. 9 is a flowchart schematically showing a first script recorded on the optical disc 10. FIG. 10 is a flowchart schematically showing a second script recorded on the optical disc 20.

Incidentally, in the explanation below, the operation of restricting the reproduction of the content by the information reproducing apparatus 100 which is not in conformity with the DVD standard, by using the disc region 61 and the device region 71 assigned to the information reproducing apparatus 100.

As shown in FIG. 7 (a), the disc region 61 is shown by 8-bit data. Specifically, a bit position 0 shows the region #1, a bit position 1 shows the region #2, a bit position 2 shows the region #3, a bit position 3 shows the region #4, a bit position 4 shows the region #5, a bit position 5 shows the region #6, a bit position 6 shows the region #7 and, a bit position 7 shows the region #8. Furthermore, in order to make it possible to reproduce at a certain region, the corresponding bit position is assigned with "0". For example, FIG. 7 (a) shows the disc region 61 assigned with region #2.

Especially in this example, the disc region 61 is assigned with region free. Specifically, as shown in FIG. 7 (b), all the bit positions are assigned with "0" in order to make the reproduction at all regions possible.

Alternatively, because the region #7 and #8 are for special purpose or not in use, in the DVD standard, at least the bit positions 0 through 6 may be assigned with "0", as shown in FIG. 7 (c).

On the other hand, a legitimate region of the optical disc 10 is assigned with a certain region rather than the region free. The legitimate region is constructed to be capable of being recognized by a first script and a second script described below.

Moreover, the device region 71 which is assigned to the information reproducing apparatus 100 is assigned to SPRM (System Parameter) #20 in the memory 115 / 122 of the information reproducing apparatus 100. Specifically, the device region assigned to SPRM #20 is shown by 8-bit data. Specifically, a bit position 0 shows the region #1, a bit position 1 shows the region #2, a bit position 2 shows the region #3, a bit position 3 shows the region #4, a bit position 4 shows the region #5, a bit position 5 shows the region #6, a bit position 6 shows the region #7 and, a bit position 7 shows the region #8. Furthermore, in order to make it possible to reproduce at a certain region, the corresponding bit position is assigned with "1". For example, FIG. 8 (a) shows the device region 71 assigned with region #3. So, the information reproducing apparatus 100 in which the device region 71 as shown in FIG. 8 (a) is assigned with SPRM #20 can reproduce the optical disc 10 in which the disc region 61 is assigned with region #3. So, the information reproducing apparatus 100 in which the device region 71 as shown in FIG. 8 (a) is assigned with SPRM #20 cannot reproduce the optical disc 10 with the disc region 61 as shown in FIG. 7 (a).

However, as the information reproducing apparatus 100 which is not in conformity with the DVD standard (more specifically, which is manufactured illegally without being in conformity with the DVD standard and can reproduce the DVD without performing controls which are supposed to be executed and are defined by the DVD standard), the one which reproduces the optical disc without performing an operation of comparing the device region 71 to the disc region 61 (i.e. without region checking), is conceivable. In other words, because the operation of comparing the device region 71 to the disc region 61 is executed by the information reproducing apparatus 100 itself, if the information reproducing apparatus 100, which does not execute the operation of comparing which is supposed to be executed, is manufactured, the content recorded on the optical disc 10 is reproduced despite the region.

Alternatively, as the information reproducing apparatus 100 which is not in conformity with the DVD standard, the one which rewrites the device region 71 in accordance with the disc region 61, is conceivable. For example, after loading the optical disc 10 as shown in FIG. 7 (a), it is conceivable that the information reproducing apparatus 100 assigned with the device region 71 as shown in FIG. 8 (a) rewrites the device region 71 assigned to the SPRM #20 as the region #2, as shown in FIG. 8 (b). In short, by rewriting the device region 71 assigned to the SPRM #20, it is conceivable that the optical disc assigned with the region #2 is reproduced by the information reproducing apparatus 100 which is supposed not to be able to reproduce the optical disc assigned with the region #2.

Alternatively, as the information reproducing apparatus 100 which is not in conformity with the DVD standard, the one which is assigned with a plurality of regions is conceivable, though it is supposed to be assigned with a single region. For example, as shown in FIG. 8 (c), to assign all of the bit position 0 through 7 of the SPRM #20 with "1" is conceivable. The information reproducing apparatus 100 having the device region 71 as shown in FIG. 8 (c) can all the optical disc 10 with the region #1 through #8.

In this example, the disc region 61 is assigned with the region free as shown in FIG. 7 (b) or FIG. 7 (c), and the first script and the second script is written in the navigation command such as the FP_PGCI, the pre-command, the cell command, the post-command and the like described above, so as to restrict the reproduction of the content by such the information reproducing apparatus 100 which is not in conformity with the DVD standard.

Specifically, because the disc region 61 is assigned with the region free, the information reproducing apparatus 100 which rewrites the device region 71 in accordance with the disc region 61 of the loaded optical disc 10 cannot determine which bit of the disc region 61 the device region 71 should be rewritten in accordance with.

However, when the disc region 61 is merely assigned with the region free, the content can be reproduced by all the information reproducing apparatus 100. Because of this, by executing the first script shown in FIG. 9 and the second script shown in FIG. 10 timely during the reproduction of the content, the reproduction of the content by the information reproducing apparatus 100 which is not in conformity with the DVD standard, is restricted.

Specifically, the first script shown in FIG. 9 is set to, for example, the FP_PGCI 59. The FP_PGCI 59 specifies data contained in the PGC executed first when the content recorded on the optical disc 10 is reproduced.

After the optical disc 10 is loaded on the information reproducing apparatus 100, if the operation for starting the reproduction is carried out by the user, FP_PGC (i.e. the reproduction of data specified by the FP_PGCI 59) is executed first. At this time, a command for making the information reproducing apparatus 100 execute the first script shown in FIG. 9 is set to the FP_PGCI 59.

Specifically, it is judged first whether the device region 71 of the information reproducing apparatus 100 is assigned with a plurality of regions (step S101). In other words, it is judged whether the bit position 0 through 8 of the device region 71 assigned to the SPRM #20 is assigned with a plurality of "1" or not. In this case, each bit position of the device region 71 is added and if the result of the addition shows the value other than "1", it may be judged that the device region 71 is assigned with a plurality of regions.

If it is judged that the device region 71 is not assigned with a plurality of regions as a result of the judgment at the step S101 (step S101: No), it is considered that the information reproducing apparatus 100 is in conformity with the DVD standard (in other words, the information reproducing apparatus 100 is not illegal or the information reproducing apparatus 100 is authorized) by the judgment at the step S101. Because of this, the reproduction of the content recorded on the optical disc 10 is continued (step S102).

On the other hand, if it is judged that the device region 71 is assigned with a plurality of regions as a result of the judgment at the step S101 (step S101: Yes), it is considered that the information reproducing apparatus 100 is not in conformity with the DVD standard (in other words, the information reproducing apparatus 100 is illegal or the information reproducing apparatus 100 is unauthorized) by the judgment at the step S101. Because of this, the reproduction of the content recorded on the optical disc 10 is restricted (step S103).

Specifically, the reproduction of the content may be discontinued immediately by using the navigation command described above or the like. In other words, the navigation command which calls the process routine to discontinue the reproduction of the content immediately, if it is judged that the device region 71 is assigned with a plurality of regions, may be written.

Moreover, the alarm screen which tells to the user "An illegal information reproducing apparatus is detected. The content cannot be reproduced" or the like, may be shown. Alternatively, the alarm screen which tells "The content can be reproduced by only the information reproducing apparatus which can reproduce only the content of region shown by the disc region 61" or the like, may be shown. In this case, the reproduction of the content may be discontinued after showing the alarm screen for a certain period of time. Specifically, an operation of a timer is started with the display of the alarm screen being trigger, and the command which discontinue the reproduction of the content may be executed automatically after a certain period of time (e.g. several seconds or several minutes) elapses.

Alternatively, the reproduction of the content may be restricted by reproducing the content without sound or by jumping into the title consisting of the content data which displays black screen. The bottom line is that it is enough to perform the control which disables the appropriate reproduction of the content.

Moreover, the second script shown in FIG. 10 is set to, for example, the pre-command. The pre-command is the command executed first when a certain PGC is reproduced.

When a certain PGC is reproduced, the pre-command is executed first. A command for making the information reproducing apparatus 100 execute the second script shown in FIG. 10 is set to the pre-command.

Specifically, the disc region 61 is assigned to the GPRM (General Parameter) #1 in the memory 115 / 122 of the information reproducing apparatus 100 (step S201). In other words, the disc region 61 is recorded on the GPRM #1. The disc region 61 assigned to the GPRM #1 is a legitimate region of the optical disc 10. In short, it is the region which is supposed to be assigned to the optical disc 10 rather than the disc region 61 which is assigned with the region free.

Then, it is judged whether the disc region 61 assigned to the GRPM #1 matches the device region 71 assigned to the SPRM #20 or not (step S202).

If it is judged that the disc region 61 assigned to the GRPM #1 matches the device region 71 assigned to the SPRM #20, as a result of the judgment at the step S202 (step S202: Yes), it is considered that the information reproducing apparatus 100 is based in conformity with DVD standard (in other words, the information reproducing apparatus 100 is not illegal or the information reproducing apparatus 100 is authorized) by the judgment at the step S202. Because of this, the reproduction of the content recorded on the optical disc 10 is continued (step S102).

If it is judged that the disc region 61 assigned to the GRPM #1 does not match the device region 71 assigned to the SPRM #20, as a result of the judgment at the step S202 (step S202: No), it is considered that the information reproducing apparatus 100 is not in conformity with the DVD standard (in other words, the information reproducing apparatus 100 is illegal or the information reproducing apparatus 100 is unauthorized) by the judgment at the step S202. Because of this, the reproduction of the content recorded on the optical disc 10 is restricted (step S103).

As explained above, according to this example, the disc region 61 of the optical disc 10 is assigned with the region free. Because of this, the information reproducing apparatus 100 which rewrites the device region 71 illegally in accordance with the disc region 61 of the loaded optical disc 10 cannot determine which bit of the disc region 61 the device region 71 should be rewritten in accordance with. Because of this, the illegal rewriting of the device region 71 in accordance with the disc region 61 of the loaded optical disc 10 is appropriately restricted. Then, though the reproduction of the content is started, since the disc region 61 is assigned with the region free, the legitimate region of the optical disc 10 is compared with the device region 71 during the reproduction. Because of this, there is little chance that the reproduction of the content is continued by the illegal information reproducing apparatus 100.

Moreover, it is judged whether the device region 71 is assigned with a plurality of regions at the beginning of the reproduction or during the reproduction. Because of this, there is little chance that the reproduction of the content is continued by the illegal information reproducing apparatus 100 whose device region 71 is assigned with a plurality of regions.

In addition, the first script and the second script are contained as a part of the reproduction sequence of the reproduction of the contents. Because of this, there is little chance that the reproduction of the content is continued even by the illegal information reproducing apparatus 100 which does not perform the region check because the first script and the second script come to be executed necessarily.

As explained above, it is able to appropriately restrict the reproduction of the content by the illegal information reproducing apparatus 100 which is not in conformity with the DVD standard.

Incidentally, the first script is set to the FP_PGCI 59 and the second script is set to the pre-command, in the explanation above. However, the first script may be set to: the pre-command; the post-command; the cell command; and the navigation command, and the second script may be set to: the FP_PGCI 59; the post-command; the cell command; and the navigation command. In addition, a plurality of first scripts and a plurality of second scripts may be set. Alternatively, the first script may be divided for each of the processes and the divided processes may be executed by different commands, and the second script may be divided for each of the processes and the divided processes may be executed by different commands. Because of such structure, it becomes harder or impossible for the illegal information reproducing apparatus 100 to avoid execution of the first script and the second script. As a result, it is able to more appropriately restrict the reproduction of the content by the illegal information reproducing apparatus 100 which is not in conformity with the DVD standard.

### (5) Modified Operation Example

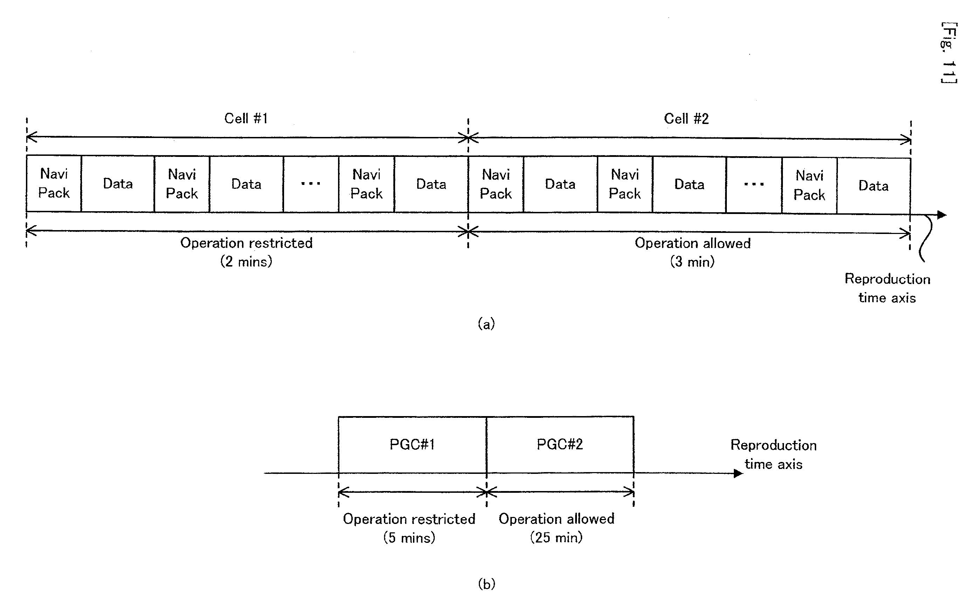

Next, with reference to FIG. 11, the modified operation using the optical disc 10 in the example will be explained. FIG. 11 is a timing chart schematically showing restriction of the user operation by UOP (User Operation) flag.

According to the DVD standard, the control which restricts input of the user operation for a certain period of time can be performed, by using the UOP flag. For example, the control which prohibits a fast-forward operation and a rewind operation for a certain period of time or which prohibits any input of operation for a certain period of time, can be performed.

The UOP flag can perform the control which restricts the input of operation by unit of the Navi Pack as shown in FIG. 11(a). Alternatively the UOP flag can perform the control which restricts the input of operation by unit of the PGC as shown in FIG. 11(b).

In the modified operation example, the script which judges whether or not the information reproducing apparatus 100 accepts the user operation while the input of the operation is restricted by the UOP flag, is set to: the FP PGCI 59; the pre-command; the post-command; the cell command; and the navigation command described above. When it is judged that the information reproducing apparatus 100 accepts the user operation while the input of the operation is restricted by the UOP flag, it can be judged that the information reproducing apparatus 100 is the illegal information reproducing apparatus which is not in conformity with the DVD standard.

Specifically, the script starts the operation of the timer as triggered by the start of the reproduction of the cell #1 in which the input of the operation is restricted by the UOP flag, as shown in FIG. 11(a). Then, the script judges whether the timer value reaches "two minutes" which means the reproduction period of the cell #1 at the time when the reproduction of the cell #1 is finished, or not. If the timer value at the time when the reproduction of the cell #1 is finished, reaches "two minutes", it can be judged that the operation such as the fast-forward operation is not carried out by the user or the operation was restricted. Therefore, it is judged that the cell #1 is reproduced by the legitimate information reproducing apparatus 100 which is in conformity with the DVD standard. In this case, the reproduction is continued. On the other hand, if the timer value at the time when the reproduction of the cell #1 is finished, does not reach "two minutes", it can be judged that the operation such as the fast-forward operation and the rewind operation is carried out, though the user operation is supposed to be restricted. In this case, it can be judged that the cell #1 is reproduced by the illegal information reproducing apparatus 100 which is not in conformity with the DVD standard. In this case, the reproduction of the content is restricted, same as the step S103 shown in FIG. 9 and FIG. 10.

As explained above, though the script which performs the operation based on the UOP flag in place of the region, is set to the: FP_PGCI 59; the pre-command; the post-command; the cell command; and the navigation command, it is able to appropriately restrict the reproduction of the content by the illegal information reproducing apparatus 100 which is not in conformity with the DVD standard.

Moreover, the script which judges whether the operation which is in conformity with the DVD standard, other than the region and the UOP flag, is performed or not and restricts the reproduction of the content when the operation which is in conformity with the DVD standard is not performed, may be recorded on the optical disc 10. For example, the script which restricts the reproduction of the content when a parental lock flag is illegally deactivated, may be recorded. Also because of this, it is able to appropriately restrict the reproduction of the content by the illegal information reproducing apparatus 100 which is not in conformity with the DVD standard.

Moreover, in the above-mentioned example, the example with respect to the optical disc 10 which is in conformity with the DVD standard is explained. However, it should be understood that various benefits described above can be received: by judging whether the operation which is in conformity with a standard is performed or not; and by recording the script which restricts the reproduction of the content when the operation which is in conformity with the standard is not performed, even by using the optical disc which is in conformity with a standard other than the DVD standard.

Moreover, in the above-mentioned example, the optical disc 10 is explained as one example of the information recording medium, and the player related to the optical disc 10 is explained as one example of the information reproducing apparatus. The present invention, however, is not limited to the optical disc and the player thereof, and can be applied to various information recording media, such as a high-density recording medium or a high transfer rate recording medium, and players thereof.

Moreover, in the present invention, various changes may be made, if desired, without departing from the essence or spirit of the invention which can be read from the claims and the entire specification. An information recording medium, an information reproducing apparatus and an information reproducing method which involve such changes, are also intended to be within the technical scope of the present invention.

## Claims

1. An information recording medium on which there are recorded:
content information; and
a judging program which is executed by an information reproducing apparatus for reproducing said content information and judges whether the information reproducing apparatus is authorized or not.

2. The information recording medium according to claim 1, wherein said judging program is recorded to be contained in reproduction sequence of said content information.

3. The information recording medium according to claim 1, wherein said judging program is recorded as pre-command or post-command information which is executed by the information reproducing apparatus before reproduction of a whole of said content information or a part of said content information.

4. The information recording medium according to claim 1, wherein said judging program is recorded as command information which is executed at a predetermined timing during reproduction of said content information.

5. The information recording medium according to claim 1, wherein a plurality of judging programs a re recorded on said information recording medium discretely.

6. The information recording medium according to claim 1, wherein said judging program is divided into a plurality of divided programs and the plurality of divided programs are recorded discretely.

7. The information recording medium according to claim 1, wherein said judging program judges whether the information reproducing apparatus is authorized or not on the basis of region information which prescribes a region in which said content information is able to be reproduced.

8. The information recording medium according to claim 7, wherein said information recording medium is assigned with region free in place of legitimate region information,
said judging program judges whether the legitimate region information of said information recording medium matches the region information assigned to said information reproducing apparatus or not after reproduction of said content information is started, and judges that said information reproducing apparatus is not authorized if the legitimate region information of said information recording medium does not match the region information assigned to said information reproducing apparatus.

9. The information recording medium according to claim 7, wherein said judging program judges whether said information reproducing apparatus is assigned with region information other than legitimate region information or not, and judges that said information reproducing apparatus is not authorized if said information reproducing apparatus is assigned with the region information other than the legitimate region information.

10. The information recording medium according to claim 7, wherein said judging program judges whether said information reproducing apparatus is assigned with a plurality of region information or not, and judges that said information reproducing apparatus is not authorized if said information reproducing apparatus is assigned with the plurality of region information.

11. The information recording medium according to claim 1, wherein said judging program judges whether said information reproducing apparatus is authorized or not, on the basis of whether or not said information reproducing apparatus accepts an operation of a user in a restriction period of operation in which the operation of the user is restricted during reproduction of said content information.

12. The information recording medium according to claim 1, wherein said judging program judges whether said information reproducing apparatus is authorized or not, on the basis of whether a parental lock function for restricting reproduction of a certain content information is deactivated or not.

13. The information recording medium according to claim 1, wherein a restricting program which is executed by said information reproducing apparatus and restricts reproduction of said content information by said information reproducing apparatus on the basis of a result of the judgment of said judging program, is further recorded.

14. The information recording medium according to claim 1, wherein a reproduction program which is executed by said information reproducing apparatus and reproduces said content information on the basis of a result of the judgment of said judging program, is further recorded.
